# EUROPEAN PATENT APPLICATION

(11) **EP 4 282 686 A1**
(43) Date of publication of application: **29.11.2023**
(21) Application number: 21920300.7
(22) Date of filing: 22.01.2021
(51) Int. Cl.: B60K 37/02, B62D 25/14

(54) **MOBILE SCREEN DEVICE AND VEHICLE**

(71) Applicant: Zhejiang Smart Intelligence Technology Co., Ltd., Ningbo, Zhejiang 315336 (CN)
(72) Inventor: CAI, Hongjie, Hangzhou Bay New District Ningbo, Zhejiang 315336 (CN); JIANG, Jian, Hangzhou Bay New District Ningbo, Zhejiang 315336 (CN); BIAN, Chengguo, Hangzhou Bay New District Ningbo, Zhejiang 315336 (CN)
(74) Representative: Zaboliene, Reda
(86) International application number: PCT/CN2021/073343
(87) International publication number: WO 2022/155902

(57) **Abstract**

A mobile screen device and a vehicle. The mobile screen device comprises a screen assembly (1), a driving assembly (2), a sliding assembly (3) and a shielding assembly (4) for shielding the sliding assembly (3), wherein the sliding assembly (3) comprises a sliding rail (31), a rotating member (32) and a sliding member (33); the rotating member (32) is connected to the sliding member (33), and the sliding member (33) is respectively connected to the screen assembly (1) and the shielding assembly (4); the driving assembly (2) is connected to the rotating member (32), and the driving assembly (2) is used for driving the rotating member (32) to rotate; and the shielding assembly (4) is arranged in the sliding rail (31), and the sliding member (33) can drive the shielding assembly (4) and the screen assembly (1) to slide along the sliding rail (31) under the drive of the rotating member (32). In the mobile screen device, the shielding assembly (4) is provided to shield the sliding assembly (3), thereby preventing the internal structure of the sliding assembly (3) from being seen from the outside, such that the mobile screen device is more aesthetic; and a roller shutter door (41) and the sliding member (33) share the same sliding rail (31), such that the overall size is smaller.

## Description

### BACKGROUND OF THE APPLICATION

### Field of the Application

The present application relates to the technical field of automotive technology, in particular to a mobile screen device and a vehicle.

### Description of Related Art

With the rapid development of automobiles, there are more and more applications of automotive display screens. Automotive display screens are previously only available in high-end or high-configuration models, but now they can be seen in small cars including A00 and A0 levels, as well as A-level economy sedans. The automotive display screen can not only display a portion of the data of the driving computer through screen display, but also play programs and add many entertainment functions.

In addition to displaying vehicle driving information, the existing dashboard display screen can even display navigation, tire pressure monitoring and other information in some models. The combination of functions is rich and partially overlaps with the functions of the central control display screen, resulting in the redistribution and design of functions between the two. The increase in functionality also makes the central control display screen become wider, resulting in difficulty in layout. Furthermore, after installing and sliding the existing display screen according to the requirements, the gaps on both sides of the display screen cannot be blocked after moving left and right, and the internal structure of the display screen is visible on the appearance, which cannot meet the product appearance requirements.

Based on the shortcomings of the existing technology, there is an urgent need to research a mobile screen device and a vehicle to solve the above problems.

### BRIEF SUMMARY OF THE APPLICATION

In order to solve the above technical problems, the present application provides a mobile screen device and a vehicle. The present application is provided with a shielding assembly to shield the sliding assembly to avoid the internal structure of the sliding assembly from being seen from the outside, making the mobile screen device more aesthetically pleasing. Further, the roller shutter door and the sliding member share the same sliding rail, making the overall size smaller.

The present application provides a mobile screen device including a screen assembly, a driving assembly, a sliding assembly, and a shielding assembly for shielding the sliding assembly;
the sliding assembly includes a sliding rail, a rotating member and a sliding member; the rotating member is connected to the sliding member, the sliding member is respectively connected to the screen assembly and the shielding assembly;
the driving assembly is connected to the rotating member, and the driving assembly is configured to drive the rotating member to rotate;
the shielding assembly is arranged in the sliding rail, and the sliding member is driven by the rotating member to move such that the sliding member drives the shielding assembly and the screen assembly to slide along the sliding rail.

Further, the shielding assembly includes a roller shutter door and a plurality of guide wheels;
the plurality of the guide wheels are arranged on the same side of the roller shutter door, and the guide wheels are arranged in the sliding rail.

Further, the roller shutter door is provided with a first mounting hole matching the sliding member, and the sliding member is arranged in the first mounting hole.

Further, a length of the roller shutter door is less than a perimeter of the sliding rail.

Further, the sliding rail includes a first limiting slot and a second limiting slot which are oppositely arranged;
one edge of the roller shutter door with the guide wheels is arranged in the first limiting slot, and the other edge of the roller shutter door is arranged in the second limiting slot, such that the roller shutter door can slide along the sliding rail.

Further, the distance between the first limiting slot and the second limiting slot is a first distance, the height of the shielding assembly is a second distance, and the first distance is not less than the second distance.

Further, the sliding assembly further includes a mounting member, one end of the mounting member is connected to the sliding rail, and the other end of the mounting member is configured to connect to a surface to be installed.

Further, a limiting structure is provided on the sliding rail, the limiting structure is configured to limit the movement of the rotating member along its axial direction, the limiting structure abuts against two ends of the rotating member, and the rotating member can rotate relative to the limiting structure.

Further, the rotating member is arranged along the length direction of the sliding rail, and the length of the rotating member is less than the length of the sliding rail.

Further, the driving assembly includes a motor and a driving member, the motor is fixed on the sliding rail, one end of the driving member is connected to the motor, and the other end of the driving member is connected to the rotating member, such that the motor can drive the rotating member to rotate.

Further, the driving member is a conveyor belt, a conveyor chain, or a gear.

Further, the sliding rail is a C-shaped structure with openings at two ends;
the two ends of the sliding rail are each provided with a first mounting bracket for limiting the position of the shielding assembly, and the first mounting bracket can abut against the shielding assembly.

Further, the first mounting bracket is provided with a second mounting hole, and a connecting member is arranged in the second mounting hole;
the sliding rail is provided with a third mounting hole, and the connecting member passes through the second mounting hole and the third mounting hole in sequence, such that the first mounting bracket is detachably connected to the sliding rail.

Further, the number of the second mounting hole corresponds to the number of the third mounting hole, and the position of the second mounting hole corresponds to the position of the third mounting hole.

Further, the rotating member is a lead screw, the sliding member is a nut, the nut is threadedly connected to the lead screw, and the screen assembly is fixedly connected to the nut.

Further, the number of the sliding member is two, and the two sliding members are each connected to the rotating member and the screen assembly.

Further, the screen assembly includes a screen and a second mounting bracket, one end of the second mounting bracket is connected to the screen, and the other end of the second mounting bracket is connected to the sliding member.

The present application further provides a vehicle including a dashboard and a mobile screen device as described above, wherein the mobile screen device is arranged on the dashboard.

The embodiments of the present application have the following beneficial effects:
1. The present application is provided with a shielding assembly to shield the sliding assembly to avoid the internal structure of the sliding assembly from being seen from the outside, making the mobile screen device more aesthetically pleasing; and the roller shutter door and the sliding member share the same sliding rail, making the overall size smaller.
2. The present application is provided with a first limiting slot and a second limiting slot for engaging with the roller shutter door to prevent the roller shutter door from falling off and improve the safety performance of the mobile screen device.

### BRIEF DESCRIPTION OF THE DRAWINGS

In order to more clearly illustrate the technical solutions of the present application, the drawings used below for the description of the embodiments or the prior art will be introduced briefly. It is obvious that the accompanying drawings in the following description are only some embodiments of the present application. For those skilled in the art, other drawings can be obtained based on these drawings without creative work.
FIG. 1 is a top view of the mobile screen device in this embodiment;
FIG. 2 is an isometric view of the mobile screen device in this embodiment;
FIG. 3 is a structural diagram of the sliding rail in this embodiment;
FIG. 4 is a structural diagram of the second mounting bracket in this embodiment;
FIG. 5 is a structural diagram of the sliding member in this embodiment;
FIG. 6 is a main view of the mobile screen device in this embodiment;
FIG. 7 is a side view of the mobile screen device in this embodiment.

The reference signs in the drawings are as follows:
1-screen assembly; 2-driving assembly; 3-sliding assembly; 4-shielding assembly; 11-screen; 12-second mounting bracket; 21-motor; 22-driving member; 31-sliding rail; 32-rotating member; 33-sliding member; 34-first mounting bracket; 35-mounting member; 41-roller shutter door; 311-first limiting slot; 312-second limiting slot.

### DETAILED DESCRIPTION OF THE APPLICATION

The following will provide a clear and complete description of the technical solution in the embodiments of the present application in conjunction with the accompanying drawings. Obviously, the described embodiments are only part of the embodiments of the present application, not all of the embodiments. Based on the embodiments in the present application, all other embodiments obtained by those skilled in the art without creative work shall fall within the scope of protection of the present application.

It should be noted that the terms "first", "second", etc. in the description and claims of the present application, as well as the accompanying drawings, are used to distinguish similar objects, without necessarily describing a specific order or sequence. It should be understood that the data used in this way can be interchanged in appropriate cases, such that the embodiments of the present application described here can be implemented in sequence other than those illustrated or described here. In addition, the terms "include" and "have", as well as any variations thereof, are intended to cover non-exclusive inclusion. For example, a process, method, system, product, or device that includes a series of steps or units, need not be limited to those clearly listed steps or units, but may also include other steps or units that are not clearly listed or inherent to these processes, methods, products, or devices.

The existing technology has the following shortcomings: in addition to displaying vehicle driving information, the existing dashboard display screen can even display navigation, tire pressure monitoring and other information in some models. The combination of functions is rich and partially overlaps with the functions of the central control display screen, resulting in the redistribution and design of functions between the two. The increase in functionality also makes the central control display screen become wider, resulting in difficulty in layout. Furthermore, after installing and sliding the existing display screen according to the requirements, the gaps on both sides of the display screen cannot be blocked after moving left and right, and the internal structure of the display screen is visible on the appearance, which cannot meet the product appearance requirements

In order to address the shortcomings of the existing technology, the present application is provided with a shielding assembly to shield the sliding assembly to avoid the internal structure of the sliding assembly from being seen from the outside, making the mobile screen device more aesthetically pleasing. Furthermore, the roller shutter door and the sliding member share the same sliding rail, making the overall size smaller. Moreover, the present application can clamp the roller shutter door by setting the first limiting slot and the second limiting slot, so as to prevent the roller shutter door from falling off and improve the safety performance of the mobile screen device.

### First embodiment

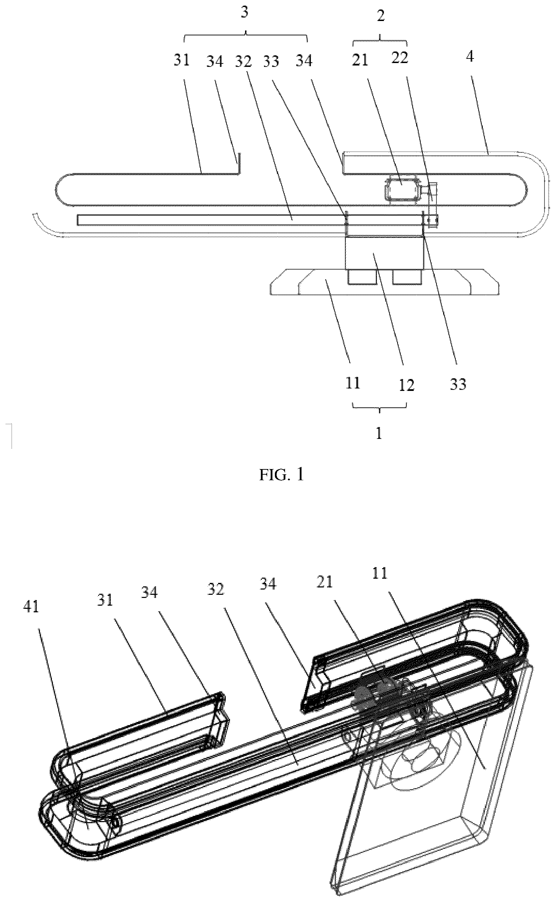

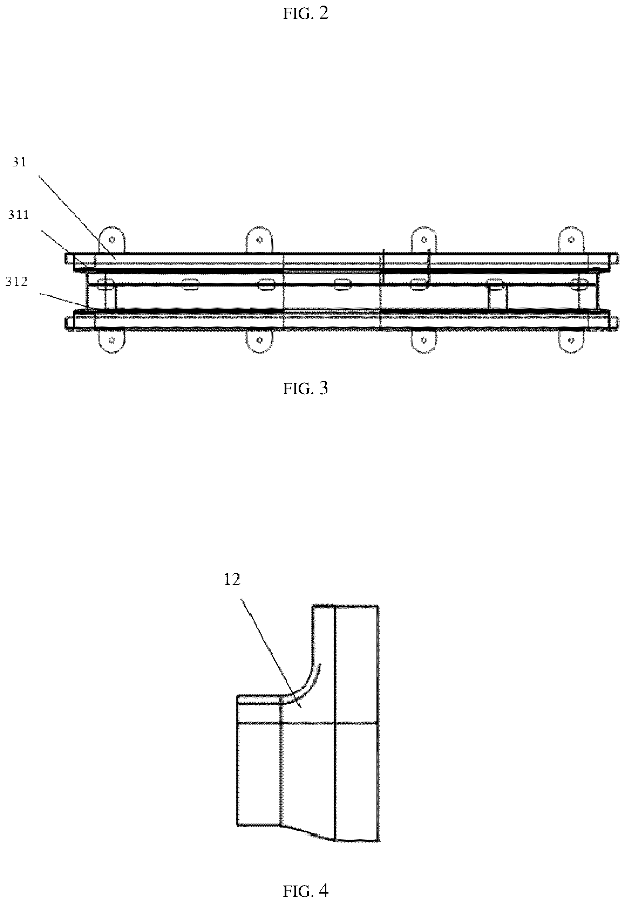

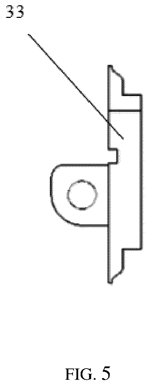

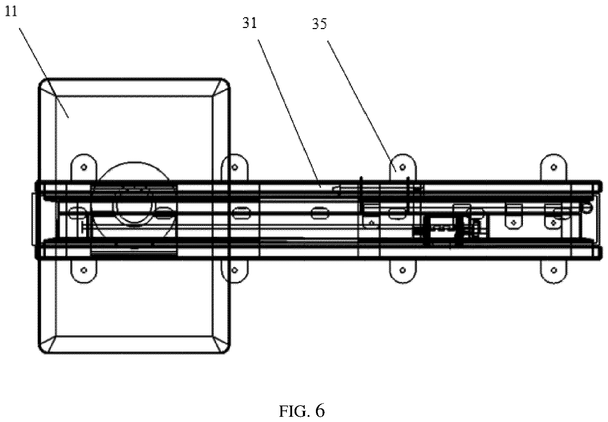

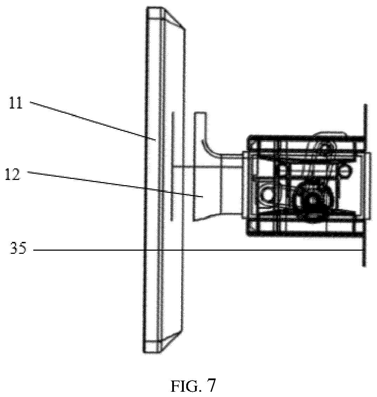

Referring to FIGs. 1 to 7, this embodiment provides a mobile screen device and a vehicle. The mobile screen device includes a screen assembly 1, a driving assembly 2, a sliding assembly 3, and a shielding assembly 4 for shielding the sliding assembly 3.

The sliding assembly 3 includes a sliding rail 31, a rotating member 32, and a sliding member 33. The rotating member 32 is connected to the sliding member 33. The sliding member 33 is respectively connected to the screen assembly 1 and the shielding assembly 4.

The driving assembly 2 is connected to the rotating member 32. The driving assembly 2 is used to drive the rotating member 32 to rotate.

The shielding assembly 4 is arranged in the sliding rail 31. The sliding member 33 can drive the shielding assembly 4 and the screen assembly 1 to slide along the sliding rail 31 under the driving of the rotating member 32.

It should be noted that the present application is provided with the shielding assembly 4 to shield the sliding assembly 3, thereby avoiding the internal structure of the sliding assembly 3 from being visible from the outside, making the mobile screen device more aesthetically pleasing, wherein the shielding assembly 4 and the screen assembly 1 move synchronously under the drive of the driving assembly 2.

Preferably, the shielding assembly 4 includes a roller shutter door 41 and a plurality of guide wheels.

The plurality of guide wheels are arranged on the same side of the roller shutter door 41, and the guide wheels are arranged in the sliding rail 31.

Specifically, one end of the guide wheel is fixed on the roller shutter door 41, and the other end of the guide wheel slides along the sliding rail 31.

In some possible embodiments, the shielding assembly 4 only includes the roller shutter door 41, and does not include the guide wheels. The roller shutter door 41 includes a first edge and a second edge which are oppositely arranged. The first edge is engaged in a first limiting slot 311, and the second edge is engaged in a second limiting slot 312. The roller shutter door 41 can slide along the sliding rail 31 under the drive of the driving assembly 2, such that the roller shutter door 41 can shield the interior of the sliding assembly 3, thus making the mobile screen device more aesthetically pleasing.

In other possible embodiments, the roller shutter door 41 can be attached with appearance color texture to achieve decorative effect and make the mobile screen device more aesthetically pleasing.

Preferably, the roller shutter door 41 is provided with a first mounting hole matching the sliding member 33, and the sliding member 33 is arranged in the first mounting hole.

In some possible embodiments, the number of the first mounting hole is one, and the size of the first mounting hole is larger than the size of the sliding member 33. Two sliding members 33 are arranged in the first mounting hole, and one end of the sliding member 33 passes through the first mounting hole and is connected to a second mounting bracket.

In other possible embodiments, the number of the first mounting hole is equal to the number of the sliding member 33, and the shape of the first mounting hole is the same as the shape of the sliding member 33, and the dimensions of the two are equal, such that the sliding member 33 is fully embedded in the first mounting hole, thereby improving the connection stability of the two.

Preferably, the length of the roller shutter door 41 is less than the perimeter of the sliding rail 31.

Specifically, the original length of the roller shutter door 41 when unfolded is less than the perimeter of the sliding rail 31, such that the roller shutter door 41 can move along the sliding rail 31 with the screen assembly 1, and meet the required moving distance of the screen assembly 1.

Preferably, the sliding rail 31 includes a first limiting slot 311 and a second limiting slot 312 which are oppositely arranged.

One edge of the roller shutter door 41 provided with the guide wheels is arranged in the first limiting slot 311, and the other edge of the roller shutter door 41 is arranged in the second limiting slot 312, such that the roller shutter door 41 can slide along the sliding rail 31.

Specifically, one edge of the roller shutter door 41 provided with the guide wheels is engaged in the first limiting slot 311, and the other edge of the roller shutter door 41 is engaged in the second limiting slot 312, so as to prevent the roller shutter door 41 from falling off from the sliding rail 31 and improve the connection stability of the overall structure.

In some possible embodiments, two opposite edges of the roller shutter door 41 are each provided with the guide wheels, and the guide wheels at the two edges are respectively arranged in the first limiting slot 311 and the second limiting slot 312, such that the roller shutter door 41 can move more smoothly.

Preferably, the distance between the first limiting slot 311 and the second limiting slot 312 is a first distance, the height of the shielding assembly 4 is a second distance, and the first distance is not less than the second distance.

Specifically, the height of the roller shutter door 41 is less than the first distance, and the sum of the height of the roller shutter door 41 and the height of the guide wheel is still less than the first distance.

Specifically, the depth of the second limiting slot 311 is greater than the height of the guide wheel, making the clamping surface of the roller shutter door 41 and the sliding rail 31 larger, thereby improving the connection stability of the two.

Preferably, the sliding assembly 3 further includes a mounting member 35, one end of the mounting member 35 is connected to the sliding rail 31, and the other end of the mounting member 35 is used to connect to the surface to be installed.

Specifically, the number of the mounting member 35 is multiple, and the specific number of the mounting member 35 is set according to the actual requirements.

In this embodiment, the number of the mounting member 35 is eight, and there are four mounting members 35 on both sides of the sliding rail 31, and the eight mounting members 35 are symmetrically arranged.

Preferably, a limiting structure is provided on the sliding rail 31, and the limiting structure is used to limit the movement of the rotating member 32 along its axial direction. The limiting structure abuts against two ends of the rotating member 32, and the rotating member 32 can rotate relative to the limiting structure.

In some possible embodiments, the sliding rail 31 includes two opposite limiting structures, and each of the limiting structures is provided with a third limiting slot. One end of the rotating member 31 is arranged in one of the third limiting slots, and the other end of the rotating member 31 is arranged in the other one of the third limiting slots. The two ends of the rotating member 31 are respectively in contact with the bottom of the two third limiting slots.

Preferably, the rotating member 32 is arranged along the length direction of the sliding rail 31, and the length of the rotating member 32 is smaller than the length of the sliding rail 31.

In some possible embodiments, the length of the rotating member 32 is required to be set according to the movement range of the screen assembly 1. The length of the rotating member 32 can be set to be equal to the length of the sliding rail 31.

Preferably, the driving assembly 2 includes a motor 21 and a driving member 22. The motor 21 is fixed on the sliding rail 31. One end of the driving member 22 is connected to the motor 21, and the other end of the driving member 22 is connected to the rotating member 32, such that the motor 21 can drive the rotating member 32 to rotate.

Specifically, the motor 21 includes an output shaft. The driving member 22 is respectively connected to the output shaft and the rotating member 32, such that the motor 21 transmits power to the rotating member 32 through the driving member 22, causing the rotating member 32 to rotate, driving the sliding member 33 to move along the axial direction of the rotating member 32, thereby driving the screen assembly 1 and the shielding assembly 4 to move.

Preferably, the driving member 22 is a conveyor belt, a conveyor chain, or a gear.

In some possible embodiments, when the driving member 22 is a conveyor belt, the rotating member 32 is provided with a first pulley, the output shaft of the motor 21 is provided with a second pulley, the conveyor belt is sleeved on the first pulley and the second pulley, and the conveyor belt transmits the power of the motor 21 to the rotating member 32.

Preferably, the sliding rail 31 is a C-shaped structure with openings at two ends.

The two ends of the sliding rail 31 are each provided with a first mounting bracket 34 for limiting the position of the shielding assembly 4, and the first mounting bracket 34 can abut against the shielding assembly 4.

Specifically, the openings at the two ends of the sliding rail 31 can facilitate the installation of the shielding assembly 4, and the shielding assembly 4 can be installed into the sliding rail 31 from the opening at one end of the sliding rail 31.

Preferably, the first mounting bracket 34 is provided with a second mounting hole, and a connecting member is arranged in the second mounting hole.

The sliding rail 31 is provided with a third mounting hole. The connecting member passes through the second mounting hole and the third mounting hole in sequence, such that the first mounting bracket 34 is detachably connected to the sliding rail 31.

Specifically, the shape of the first mounting bracket 34 is adapted to the shape of the open end of the sliding rail 31.

Preferably, the number of the second mounting hole corresponds to the number of the third mounting hole, and the position of the second mounting hole corresponds to the position of the third mounting hole.

In some possible embodiments, one of the first mounting brackets 34 is fixedly connected to the sliding rail 31, and the other one of the first mounting brackets 34 is detachably connected to the sliding rail 31.

Preferably, the rotating member 32 is a lead screw, the sliding member 33 is a nut, and the nut is threadedly connected to the lead screw. The screen assembly 1 is fixedly connected to the nut.

Preferably, the number of the sliding member 33 is two, and the two sliding members 33 are each connected to the rotating member 32 and the screen assembly 1.

In some possible embodiments, the number of the sliding member 33 is one, one end of the sliding member 33 is connected to the rotating member 32, and the other end of the sliding member 33 is connected to the screen assembly 1.

Preferably, the screen assembly 1 includes a screen 11 and a second mounting bracket 12. One end of the second mounting bracket 12 is connected to the screen 11, and the other end of the second mounting bracket 12 is connected to the sliding member 33.

Specifically, the second mounting bracket 12 is detachably connected to the screen 11.

In some possible embodiments, the screen 11 is provided with a first clamping portion, and the second mounting bracket 12 is provided with a second clamping portion. The screen 11 and the second mounting bracket 12 are clamped through the first clamping portion and the second clamping portion, making the screen 11 and the second mounting bracket 12 detachably connected.

In other possible embodiments, the screen 11 is provided with a first threaded hole, the second mounting bracket 12 is provided with a second threaded hole that matches the first threaded hole. A bolt is arranged inside the second threaded hole, and the screen 11 and the second mounting bracket 12 are connected through the bolt.

The use process of the mobile screen device is as follows: when the screen 11 needs to be moved, the motor 21 is controlled to rotate, thereby driving the rotating member 32 to rotate, and causing the sliding member 33 to move along the axial direction of the rotating member 32. The sliding member 33 drives the roller shutter door 41 and the screen assembly 1 to move together along the axial direction of the rotating member 32.

The present application further provides a vehicle, which includes a dashboard and a mobile screen device as described above. The mobile screen device is arranged on the dashboard.

Although the present application has been described through preferred embodiments, the present application is not limited to the embodiments described herein and further includes various changes and variations made without departing from the scope of the present application.

In this description, the terms "front", "back", "up", "down", etc. are defined based on the positions of the elements in the drawings and between them, merely for the clarity and convenience of expressing the technical solution. It should be understood that the use of the directional words should not limit the scope of protection of the present application.

In this description, the above embodiments and the features in the embodiments can be combined with each other If no conflict exists.

The above disclosure is only a preferred embodiment of the present application, and of course, it cannot be used to limit the scope of the present application. Therefore, the equivalent changes made according to the claims of the present application still fall within the scope of the present application.

## Claims

1. A mobile screen device, comprising a screen assembly (1), a driving assembly (2), a sliding assembly (3), and a shielding assembly (4) for shielding the sliding assembly (3);
wherein the sliding assembly (3) comprises a sliding rail (31), a rotating member (32) and a sliding member (33); the rotating member (32) is connected to the sliding member (33), the sliding member (33) is respectively connected to the screen assembly (1) and the shielding assembly (4);
the driving assembly (2) is connected to the rotating member (32), and the driving assembly (2) is configured to drive the rotating member (32) to rotate;
the shielding assembly (4) is arranged in the sliding rail (31), and the sliding member (33) is driven by the rotating member (32) to move such that the sliding member (33) drives the shielding assembly (4) and the screen assembly (1) to slide along the sliding rail (31).

2. The mobile screen device as claimed in claim 1, wherein the shielding assembly (4) comprises a roller shutter door (41) and a plurality of guide wheels;
the plurality of the guide wheels are arranged on the same side of the roller shutter door (41), and the guide wheels are arranged in the sliding rail (31).

3. The mobile screen device as claimed in claim **2,** wherein the roller shutter door (41) is provided with a first mounting hole matching the sliding member (33), and the sliding member (33) is arranged in the first mounting hole.

4. The mobile screen device as claimed in claim **2,** wherein a length of the roller shutter door (41) is less than a perimeter of the sliding rail (31).

5. The mobile screen device as claimed in claim **2,** wherein the sliding rail (31) comprises a first limiting slot (311) and a second limiting slot (312) which are oppositely arranged;
one edge of the roller shutter door (41) with the guide wheels is arranged in the first limiting slot (311), and the other edge of the roller shutter door (41) is arranged in the second limiting slot (312), such that the roller shutter door (41) can slide along the sliding rail (31).

6. The mobile screen device as claimed in claim **5,** wherein the distance between the first limiting slot (311) and the second limiting slot (312) is a first distance, the height of the shielding assembly (4) is a second distance, and the first distance is not less than the second distance.

7. The mobile screen device as claimed in claim **1,** wherein the sliding assembly (3) further comprises a mounting member (35), one end of the mounting member (35) is connected to the sliding rail (31), and the other end of the mounting member (35) is configured to connect to a surface to be installed.

8. The mobile screen device as claimed in claim **1,** wherein a limiting structure is provided on the sliding rail (31), the limiting structure is configured to limit the movement of the rotating member (32) along its axial direction, the limiting structure abuts against two ends of the rotating member (32), and the rotating member (32) can rotate relative to the limiting structure.

9. The mobile screen device as claimed in claim **1,** wherein the rotating member (32) is arranged along the length direction of the sliding rail (31), and the length of the rotating member (32) is less than the length of the sliding rail (31).

10. The mobile screen device as claimed in claim **1,** wherein the driving assembly (2) comprises a motor (21) and a driving member (22), the motor (21) is fixed on the sliding rail (31), one end of the driving member (22) is connected to the motor (21), and the other end of the driving member (22) is connected to the rotating member (32), such that the motor (21) can drive the rotating member (32) to rotate.

11. The mobile screen device as claimed in claim **10,** wherein the driving member (22) is a conveyor belt, a conveyor chain, or a gear.

12. The mobile screen device as claimed in claim **1,** wherein the sliding rail (31) is a C-shaped structure with openings at two ends;
the two ends of the sliding rail (31) are each provided with a first mounting bracket (34) for limiting the position of the shielding assembly (4), and the first mounting bracket (34) can abut against the shielding assembly (4).

13. The mobile screen device as claimed in claim **12,** wherein the first mounting bracket (34) is provided with a second mounting hole, and a connecting member is arranged in the second mounting hole;
the sliding rail (31) is provided with a third mounting hole, and the connecting member passes through the second mounting hole and the third mounting hole in sequence, such that the first mounting bracket (34) is detachably connected to the sliding rail (31).

14. The mobile screen device as claimed in claim **13,** wherein the number of the second mounting hole corresponds to the number of the third mounting hole, and the position of the second mounting hole corresponds to the position of the third mounting hole.

15. The mobile screen device as claimed in claim **1,** wherein the rotating member (32) is a lead screw, the sliding member (33) is a nut, the nut is threadedly connected to the lead screw, and the screen assembly (1) is fixedly connected to the nut.

16. The mobile screen device as claimed in claim **15,** wherein the number of the sliding member (33) is two, and the two sliding members (33) are each connected to the rotating member (32) and the screen assembly (1).

17. The mobile screen device as claimed in claim **1,** wherein the screen assembly (1) comprises a screen (11) and a second mounting bracket (12), one end of the second mounting bracket (12) is connected to the screen (11), and the other end of the second mounting bracket (12) is connected to the sliding member (33).

18. A vehicle, comprising a dashboard and a mobile screen device as claimed in any one of claims **1** to **17,** wherein the mobile screen device is arranged on the dashboard.
